# EUROPEAN PATENT APPLICATION

(11) **EP 4 040 267 A1**
(43) Date of publication of application: **10.08.2022**
(21) Application number: 21179561.2
(22) Date of filing: 15.06.2021
(51) Int. Cl.: G06F 3/01

(54) **GLOVE EQUIPPED WITH ELECTROMYOGRAPHIC SENSORS FOR REMOTE CONTROL OF PLANTS**

(30) Priority: 05.02.2021 IT 202100002627
(71) Applicant: Virtual Factory S.r.l., 84091 Battipaglia (SA) (IT)
(72) Inventor: LONGO, Donato, 84091 Battipaglia (SA) (IT); MAINARDI, Luigi, 84091 Battipaglia (SA) (IT); CATALDO, Emilio, 84091 Battipaglia (SA) (IT); MERCOGLIANO, Umberto, 81024 Maddaloni (CE) (IT)
(74) Representative: Conversano, Gabriele

(57) **Abstract**

Glove (1) comprising: a plurality of extensometers arranged at the fingers, configured to detect the deformation of the glove upon each finger of the hand opening and closing; electric circuits configured to allow to read said extensometers (11); control means configured to acquire the value read by each of said extensometers and characterized in that it comprises further: at least two other laces (20, 30) configured so that they can be laced up at the forearm and arm of an operator wearing the device, each one of said further laces being provided with at least an extensometer (21, 31) configured to detect the deformation of the further lace it is fastened to and at least an electromyography sensor (22, 32), control means configured to acquire the signals detected by all the sensors and to transmit them to outer processing means, said control means being configured to acquire periodically the signal detected by said extensometers (21, 31) and by said electromyography sensors (22, 32), to determine the deformation of each of said further laces (20, 30) as a function of the signal detected by said extensometers, to compare said deformation with a predetermined reference threshold and to filter the signal detected by said electromyography sensors as a function of said deformation.

## Description

Th present invention relates to a virtual reality device for remote control of systems, for example industrial systems, and more in particular a device comprising a glove provided with electromyography sensors and extensometers, specifically but not exclusively configured for remote control of industrial systems, by means of virtual reality environments.

### State of the art

At the state of the art, there are known various control methods using virtual reality environments to allow remote operativity in environments that would be dangerous for humans otherwise. Herein, it is referred in particular to the control of industrial systems.

In fact, it is commonly known that in this type of systems there are environments with risks of any nature, such for example the explosion risk, the risk of harmful substances, the risk of falling from height, the risk linked to the operativity of adjacent environments.

In all these cases, it is useful to minimize the presence of the human operator.

Therefore, many devices have been developed that allow to remote-control a plurality of actuators by means of a virtual reality environment, which is subjected to the operator by means of virtual reality visors or similar devices.

The operator immersed in this kind of environment is also provided with controllers configured to detect the position and gestures of the operator's hands, and to control actuators consequently.

With specific reference to controllers, it is highlighted that many embodiments thereof have been developed. For example, in document WO2019183357A1 a stable device is described, to track the position of the hands in a virtual reality environment. The device described comprises a glove and a plurality of accelerometers, each one provided with an own controller. The information detected by the accelerometers and by each position sensor is sent to an inverse kinematic solver which reconstructs the position of the hands.

In addition to the usage of position sensors and accelerometers it is also known the usage of electromyography sensors.

The electromyography sensors are sensors configured to detect a potential difference between two points of the skin at close distance, so that the muscle contraction or relaxation status is reconstructed. Their usage is particularly known in the control of robotic prostheses. An example is described in document CN202235787, another example is described in document CN104706359.

### Technical problem

Even if there are known many embodiments of controllers configured to detect the position and movements of an operator's hands, to the best of the current inventors' knowledge, there are not known devices able to detect both great and small movements of an operator's hands, and that at the same time allow to not consider involuntary contractions of the operator's hand and arm muscles to avoid carrying out actions in the virtual environment that the operator has not actually done in the real environment.

More in particular, there are not known devices using extensometers and electromyography sensors together to detect the position and movement of the hands, fingers, arm and forearm of an operator.

### Aim of the invention

Therefore, aim of the present invention is to provide a controller which overcomes the limits of the embodiments known at the state of the art, in particular, which is configured to detect both great and small movements of an operator's hands, and that at the same time allows to not consider involuntary contractions to avoid carrying out actions in the virtual environment that the operator has not actually done in the real environment.

More in particular, aim of the present invention is to provide a device using extensometers and electromyography sensors together to detect the position and movement of the hands, fingers, arm and forearm of an operator, in order to allow to recognize correctly both the hand gestures and the movements carried out by the upper limbs.

### Brief description of the invention

The present invention realizes the prefixed aims since it is a glove (1) comprising: a plurality of extensometers arranged at the fingers, configured to detect the deformation of the glove upon each finger of the hand opening and closing; electric circuits configured to allow to read said extensometers (11); control means configured to acquire the value read by each of said extensometers and provided with communication means to exchange information with outer computing means and characterized in that it comprises further: at least two other laces (20, 30) configured so that they can be laced up at the forearm and arm of an operator wearing the device, each one of said further laces being provided with at least an extensometer (21, 31) configured to detect the deformation of the respective lace it is fastened to, at least an electromyography sensor (22, 32) configured to detect contractions of the user arm or forearm muscles, control means configured to acquire the signals detected by all the sensors and to transmit them to outer processing means, said control means being configured to acquire periodically the signal detected by said extensometers (21, 31) and by said electromyography sensors (22, 32), to determine the deformation of each of said further laces (20, 30) as a function of the signal detected by said extensometers, to compare said deformation with a predetermined reference threshold and to filter the signal detected by said electromyography sensors as a function of said deformation.

### Description of figures

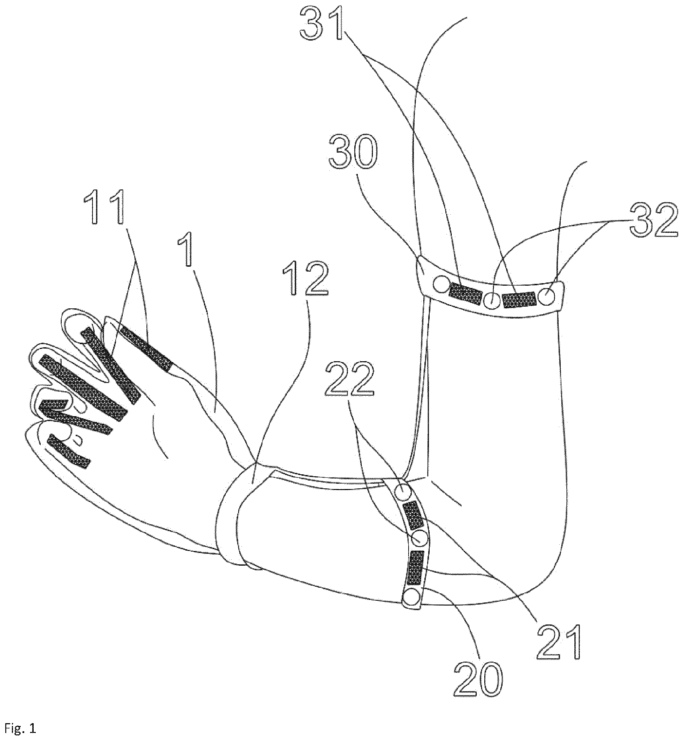

Figure 1 shows a view of a preferred and not limiting embodiment of a device according to the invention.

### Detailed description of the invention

As it is shown in figure 1, the device according to the invention is a glove (1) comprising a plurality of extensometers arranged at the fingers, configured to detect the deformation of the glove upon each finger of the hand opening and closing. Said extensometers are preferably arranged at the back of the fingers. In a second embodiment, said extensometers are arranged at the surface of fingers facing the inside of the hand (i.e. the palm).

Preferably, a plurality of extensometers (11), positioned at the joints between the various phalanges are associated to each finger, so that the respective rotation of each finger phalange is detected.

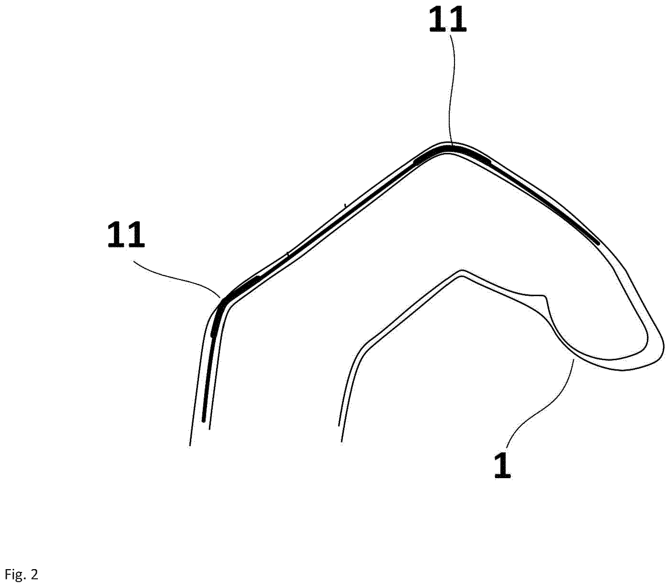

This configuration is shown in figure 2, where an extensometer (11) is shown at each finger knuckle. It is clear that the extensometer elongation is a function of the respective rotation of the two phalanges between which it is positioned. Obviously, although not shown in figure, the device comprises electric circuits configured to allow to read the extensometers (11) and control means configured to acquire the value read by each one of said extensometers. Said extensometers are preferably fastened on the inner surface of said glove (1), so that they are in strict contact with the skin.

Moreover, said glove (1) comprises a lace (12) configured to fix the glove to the hand wrist and to avoid that it can be taken off even partially after usage.

The device according to the invention is also characterized in that it comprises two other laces (20, 30) configured to be laced at the forearm and arm of an operator. Said further laces (20, 30) are preferably elastic.

Each one of said further laces comprises at least an extensometer (21, 31) configured to detect the deformation of the further lace it is fastened to and at least an electromyography sensor (22, 32). Preferably but not limitingly, a plurality of electromyography sensors configured to detect the user arm or forearm muscle contractions are associated to each one of said laces (20, 30). Although not shown in figure, the device comprises also electric circuits needed to read the values detected by said extensometers and said electromyography sensors.

The device comprises also control means configured to acquire the signals detected by all the sensors provided (extensometers and electromyography sensors) and to transmit them to outer processing means.

The transmission can occur, without departing from the aims of the present invention, by means of a wired connection or by means of wireless connections, by using any one of the techniques known per se at the state of the art.

The device is characterized in that said control means are configured to acquire periodically the signal detected by said extensometers (21, 31) and by said electromyography sensors (22, 32), to determine the deformation of each of said further laces (20, 30) as a function of the signal detected by said extensometers, to compare said deformation with a predetermined reference threshold and to filter the signal detected by said electromyography sensors as a function of said deformation.

In a preferred embodiment said predetermined threshold is 1 mm.

This structure of the device and this usage of the signal deriving from electromyography sensors and extensometers allows to classify the contractions detected by the electromyography sensors as voluntary or involuntary.

In fact, especially when the operator's limbs are tensed up because he is keeping a constant position, it is possible that the arm and forearm muscles are subjected to involuntary contractions. Anyway, these involuntary contractions generate sub-millimeter deformations as a function both of the short duration and modest dimension of the muscle contraction. On the contrary, instead, a voluntary movement is characterized by a wider deformation of the epidermal tissue.

Anyway, it is not easy to individuate this kind of contractions only from the analysis of the electromyography signal. In fact, it is possible that this occurs in an acceptably correct way only by using complex signal analysis algorithms, which need long training sessions.

On the contrary, the provision of the extensometer allows to filter automatically and reliably all the involuntary contractions. This fact limits strongly the need of device calibration in order to adapt it to the single operator.

In fact, it is to be considered that in the field of industrial systems operation, the same device can be used by different users, as a function of the work shift.

It is in fact a very different field than the one of the robotic prostheses, where the same user uses for months or even years the same prothesis, and so it becomes unimportant the time needed to train the system to recognize muscle contractions.

On the contrary, with the device according to the present invention it is possible to detect involuntary movements (myoclonuses) also in case of displacement of the electrodes of the electromyography sensors with respect to their ideal position, and without the need of calibration.

In a first preferred embodiment, said filtering operation of the signal detected by the electromyography sensors consists in excluding wholly the signal detected by the electromyography sensors at the time intervals for which the deformation detected by means of the extensometers is lower than the predetermined threshold.

Therefore, the device is configured:
- to acquire the deformation of each one of said extensometers associated to each joint between the various finger phalanges or between phalanges and the hand palm;
- to determine the respective rotation of two phalanges or the proximal phalange with respect to the hand palm as a function of said deformations;
- to determine the whole configuration of the hand of the user as a function of said respective rotations;
- to acquire the signals deriving from said electromyography sensors associated to said laces (20, 30), and at the same time, the deformation of each one of said extensometers associated to each one of said laces;
- to determine the muscle contractions associated to the arm and/or forearm muscles when the deformations of the lace (20, 30) associated to the arm or forearm exceed a predetermined threshold;
- to transmit said whole configuration of the hand and said muscle contractions to said outer computing means.

It is to be specified that for "whole configuration of the hand" it is intended a set of values of rotation of each joint, which, as a whole, allow to reconstruct the position of the hand with a kinematic model.

In a first embodiment, said whole configuration of the hand comprises 14 values of rotation (detectable by means of so many extensometers), associated in number of two to the thumb and three to each one of the other fingers.

In another embodiment, the configuration of the hand comprises another value of rotation, detectable by means of a respective extensometer associated to the glove according to the invention and relating to the rotation of the metacarpus with respect to the palm.

## Claims

1. Glove (1) comprising:
- a plurality of extensometers configured to detect the deformation of the glove upon each finger of the hand opening and closing, positioned at the back of the fingers and at the joints between the various phalanges of each finger;
- electric circuits configured to allow to read said extensometers (11);
- control means configured to acquire and process the value read by each of said extensometers and provided with communication means to exchange information with outer computing means **characterized in that** it comprises further:
- at least two other laces (20, 30) configured so that they can be laced up at the forearm and arm of an operator wearing the device, each one of said further laces being provided with at least an extensometer (21, 31) configured to detect the deformation of the respective lace (20, 30), and at least an electromyography sensor (22, 32),
- control means configured to acquire the signals detected by all the sensors and to transmit them to outer processing means,
said control means being configured to acquire periodically the signal detected by said extensometers (21, 31) and by said electromyography sensors (22, 32), to determine the deformation of each of said further laces (20, 30) as a function of the signal detected by said extensometers, to compare said deformation with a predetermined reference threshold and to filter the signal detected by said electromyography sensors as a function of said deformation,
said control means being configured:
- to acquire the deformation of each one of said extensometers associated to each joint between the various finger phalanges or between phalanges and the hand palm;
- to determine the respective rotation of two phalanges or the proximal phalange with respect to the hand palm as a function of said deformations;
- to determine the whole configuration of the hand of the user as a function of said respective rotations;
- to acquire the signals deriving from said electromyography sensors associated to said laces (20, 30), and at the same time, the deformation of each one of said extensometers associated to each one of said laces;
- to identify the muscle contractions associated to the arm and/or forearm muscles when the deformations of the lace (20, 30) associated to the arm or forearm exceed a predetermined threshold;
- to transmit said whole configuration of the hand and said muscle contractions to said outer computing means.

2. Glove according to claim 1, **characterized in that** said "whole configuration of the hand" comprises a set of 14 values relating to the rotation of each joint, associated in number of two to the thumb and three to each one of the other fingers.

3. Glove according to claim 2, **characterized in that** said configuration of the hand comprises another value of rotation, relating to the rotation of the metacarpus with respect to the palm.

4. Glove according to claim 1 or 2, **characterized in that** said predetermined threshold is 1 mm.

5. Glove according to any one of the preceding claims, **characterized in that** said filtering operation of the signal detected by the electromyography sensors consists in excluding wholly the signal detected by the electromyography sensors at the time intervals for which the deformation detected by means of the extensometers is lower than said predetermined threshold.

6. Glove according to any one of the preceding claims, **characterized in that** a plurality of extensometers (11) are associated to each finger, so that the respective rotation of each finger phalange is detected.

7. Glove according to any one of the preceding claims, **characterized in that** said glove (1) comprises a lace (12) configured to fix the glove to the hand wrist and to avoid that it can be taken off even partially after usage.

8. Glove according to any one of the preceding claims, **characterized in that** said further laces (20, 30) are elastic.

9. Glove according to any one of the preceding claims, **characterized in that** a plurality of electromyography sensors configured to detect the user arm or forearm muscle contractions are associated to each one of said laces (20, 30).
